# EUROPEAN PATENT APPLICATION

(11) **EP 4 566 453 A1**
(43) Date of publication of application: **11.06.2025**
(21) Application number: 24216860.7
(22) Date of filing: 02.12.2024
(51) Int. Cl.: A23C 11/00, A23L 11/65

(54) **SYSTEM AND METHOD FOR PRODUCING LIQUID SOY BASE FOR HUMAN CONSUMPTION**

(30) Priority: 06.12.2023 EP 23214690
(71) Applicant: Tetra Laval Holdings & Finance S.A., 1009 Pully (CH)
(72) Inventor: Seah, ChongMeng, 629414 Singapore (SG); Law, KiatMeng, 629414 Singapore (SG); Ng, Erica, 629414 Singapore (SG); Ho, KoonWah, 629414 Singapore (SG)
(74) Representative: Tetra Pak - Patent Attorneys SE

(57) **Abstract**

A system is operated, in accordance with a method, to produce a liquid soy base (12) for human consumption. The system comprises a first grinding arrangement (201), which is arranged to mechanically process soya beans (10a) and a water-based liquid (10b) into a first mixture with a first particle size. The system further comprises a second grinding arrangement (203), which is configured to process the first mixture by hydrodynamic cavitation to produce a second mixture with a second particle size that is smaller than the first particle size. The system provides the liquid soy base (12) based on the second mixture. By the second grinding arrangement, the system produces minimum, or no, soy residue ("okara").

## Description

### Technical Field

The present disclosure generally relates to the field of beverage production, and in particular to resource-efficient production of a liquid soy base for human consumption.

### Background

Soy beverages may be produced from a variety of starting materials, such as soya beans, soy flour, soy powder, etc. In the industry today, soy beverages are commonly produced by an extraction process, using soya beans as raw material. The soya beans are first subjected to grinding with water to produce a slurry with an appropriate particle size for further processing. The grinding is followed by enzyme deactivation, for example by steam injection, to inactivate trypsin inhibitors present in the soya beans. If not inactivated, the trypsin inhibitors will interfere with the utilization of protein in the human body. After enzyme activation, fiber separation is performed to separate insoluble solids or fibers from the slurry, while retaining most of the watersoluble nutrients and solids in the resulting soy extract. The insoluble solids form a soy residue, which is commonly known as "okara". The fiber separation process may, for example, be performed by use of a conventional decanter. The resulting soy extract, also known as "liquid soy base", may be used as a starting material for further formulation into soy beverages or other soy products.

The conventional extraction process produces huge amounts of soy residue, "okara". The soy residue is normally discarded. It may alternatively be used as animal feed. Regardless, the extraction process creates significant environmental waste and disposal costs for the industry. It is also known that the soy residue may contain considerable amounts of protein, fiber, fat, and other nutrients that may be of value for human consumption.

### Summary

It is an objective to at least partly overcome one or more limitations of the prior art.

One such objective is to reduce the amount of soy residue that is produced in production of liquid soy base from soya beans.

One or more of these objectives, as well as further objectives that may appear from the description below, are at least partly achieved by a system for producing a liquid soy base for human consumption, and a corresponding method, according to the independent claims, embodiments thereof being defined by the dependent claims.

The present solution is based on a finding that the amount of soy residue can be significantly reduced by processing the mixture from the initial grinding of the soya beans by hydrodynamic cavitation. Surprisingly, the present Applicant has found that by optimization of the hydrodynamic cavitation, and the initial grinding in relation to the hydrodynamic cavitation, it is possible to achieve a quality liquid soy base that includes at least 90%, 95% or 98% by weight of the solid content of the soya beans. This means that the amount of soy residue, "okara", is reduced to a fraction of what is produced in a conventional extraction process. This has clear environmental benefits. For example, less waste needs to be handled for disposal. Further, the utilization of the raw material, i.e. the production yield, is increased. Still further, since a larger portion of the nutritional components of the soya beans is retained during production, the nutritional value of the liquid soy base is increased.

The present Applicant has found that the use of hydrodynamic cavitation even makes it possible to produce the liquid soy base without the need for any separation processing for removal of insoluble solids. Thus, the totality of the input soya beans ends up in the liquid soy base. In the context of the present application, such a liquid soy base is denoted "wholesome soy base". The elimination of the need for solids separation will greatly simplify the structure and operation of the system for producing the liquid soy base, compared to a system that involves equipment both for solids separation and equipment for hydrodynamic cavitation.

Still other objectives and technical advantages as well as aspects, features, and embodiments will appear from the following detailed description as well as from the drawings.

### Drawings

Fig. 1 is a sequence diagram of a prior art method for producing a liquid soy base.
Fig. 2A is a sequence diagram of an example method for producing a liquid soy base in accordance with embodiments, and Fig. 2B is a block diagram of an example system for performing the method in Fig. 2A.
Figs 3A-3C are block diagrams of example fine grinding arrangements for processing an incoming mixture by hydrodynamic cavitation.
Fig. 4A is an exploded perspective view of an example cavitation device for use in the fine grinding arrangements of Figs 3A-3C, Fig. 4B is an enlarged view of a flow-defining component in the cavitation device of Fig. 4A, and Fig. 4C is a section view of the cavitation device of Fig. 4A in assembled state.
Fig. 5A is a sequence diagram of an example implementation of the method in Fig. 2A, and Fig. 5B is a block diagram of a system for performing the method of Fig. 5A.
Figs 6A-6B are graphs of particle size measured in a test rig.
Figs 7A-7B are sequence diagrams of example methods for producing a liquid soy base in accordance with embodiments.

### Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, a "liquid soy base" or "soy base" is a liquid that is suitable as starting material for further formulation into soy beverages or other soy products. Typically, the liquid soy base lacks one or more properties that make it enjoyable for human consumption, for example in terms of taste and/or mouthfeel.

The term "hydrodynamic cavitation" is used in its ordinary meaning and is a process of vaporization, bubble generation and bubble implosion that occurs in a flowing liquid as a result of a decrease and subsequent increase in local pressure.

The term "D90" is used in its ordinary meaning and is a measure of particle size. The D90 value for a mixture designates that 90% of the particles in the mixture have a diameter or size of less than the D90 value.

As used herein, "slurry" refers to a mixture of solids denser than water suspended in liquid.

As used herein, a "disc mill" is used in its ordinary meaning and is also known as an attrition mill. A disc mill comprises opposing discs or plates which interact with the material to be milled. During milling, one disc is fixed and the other disc is rotating. In some implementations, the gap between the discs is adjustable. The discs may be grooved, serrated, or spiked. One of the discs may be perforated to transmit the comminuted material.

As used herein, a "colloid mill" is used in its ordinary meaning and comprises a static cone (stator) and a rapidly rotating cone (rotor), which form a gap in which fluid material is milled.

As used herein, a range that is defined to extend from a first value to a second value is intended to include the first and second values.

In the drawings to be described hereinbelow, input and output materials are represented by boxes with rounded corners, whereas rectangular boxes represent processing steps or system components. Any methods described herein may be computer-implemented and performed by a control device. The control device may be implemented by hardware or a combination of software and hardware. For example, the control device may comprise processor circuitry, computer memory and a signal interface. A control program comprising computer instructions may be stored in the computer memory and executed by the processor circuitry to perform methods and procedures as described in hereinbelow, through generation and output of control signals via the signal interface. The control program may be supplied to the control device on a computer-readable medium, which may be a tangible (non-transitory) product (e.g. magnetic medium, optical disk, read-only memory, flash memory, etc.) or a propagating signal.

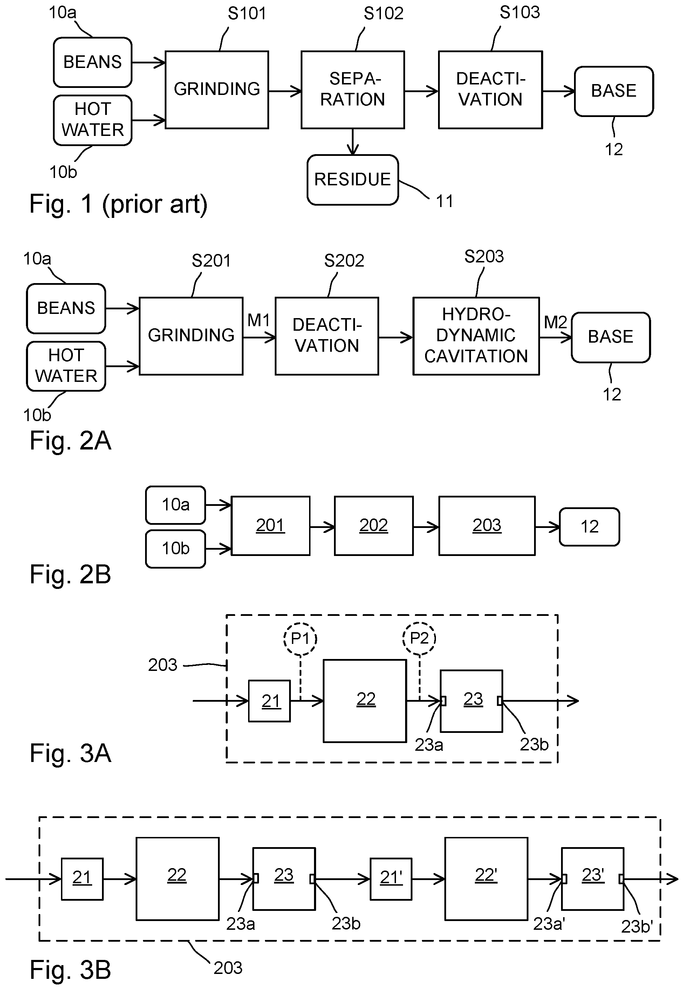

Fig. 1 is a sequence diagram of a conventional method of producing a liquid soy base, as briefly described in the Background section. The known method includes a grinding step S101, in which soya beans 10a are mixed with hot water 10b into a slurry. The soya beans 10a may be whole or dehulled. In the grinding step S101, the soya beans 10a are mechanically processed to achieve a particle size within the limitations of the grinding equipment used. The temperature of the mixture of soya beans 10a and water 10b during the grinding step S101 may be controlled to achieve either a beany or a low-beany taste profile, as desired. The grinding step S101 is followed by a separation step S102, in which the slurry is separated into liquid and residue (okara) 11, which is removed from further processing. The separation step S101 is designed to remove insoluble solids that are larger than a predefined size, for example in the range of 50-200 µm. The separation step S102 may involve centrifugation, in which the slurry is subjected to high-speed centrifugal forces. For example, the separation step S102 may be performed by use of one or more decanters. In a deactivation step S103, the liquid from the separation step S102 is processed for deactivation of included enzymes, primarily trypsin inhibitors. The deactivation step S103 may involve heat treatment, in which the liquid is heated to a predefined deactivation temperature for a predefined time period, as is known in the art. The heat treatment in step S103 may involve steam injection and/or be performed in one or more heat exchangers. The deactivated liquid forms the liquid soy base 12, which is output for further processing.

Fig. 2A is a sequence diagram of an example method for producing a liquid soy base 12 in accordance with an embodiment. The input material includes soya beans 10a (whole or dehulled) and water 10b, which may pre-heated (as shown) or not. The water 10b may contain additional substances. Thus, generally, the input material 10b may be a water-containing liquid of any kind. In the illustrated example, the method comprises three sequential steps S201-S203.

In step S201, which is a main grinding step, the soya beans 10a and the water-containing liquid 10b are subjected to a grinding process that mechanically disintegrates the soya beans to form a first mixture M1 with a first particle size. The particle size may be defined in any conventional way, for example in accordance with the ISO standard for representation of results of particle size analysis.

In step S202, which is optional, the mixture M1 is processed for enzyme deactivation, for example by heat treatment. In some embodiments, step S202 is designed to deactivate (inactivate) trypsin inhibitors. As noted above, it may be desirable to ensure that trypsin inhibitors are deactivated in the soy base 12, since the trypsin inhibitors reduce the protein efficiency of the soy base 12 and therefore lowers the ability of the consumer's body to efficiently and fully utilize the protein in the final product that is produced from the soy base 12. Alternatively or additionally, step S202 may be designed to deactivate (inactivate) other enzymes, such as lipoxygenases. By deactivating lipoxygenase, the bean taste profile of the soy base 12 is reduced.

In step S203, which is a fine grinding step, the mixture M1 is processed by hydrodynamic cavitation (HDC) to produce a second mixture M2 with a second particle size that is smaller than the first particle size. After step S203, the soy base 12 is provided based on the mixture M2. Typically, the mixture M2 is the soy base 12.

It has been found that the provision of step S203 makes it possible to produce the soy base without the need for a separation step (cf. S102 in Fig. 1), provided that the second particle size is sufficiently small to allow final products, which are produced from the soy base, to have an acceptable mouthfeel. Hence, the method in FIG. 2A is configured to produce the soy base 12 without separation and removal of solid content from either mixture M1, M2.

In an alternative embodiment, not shown, the mixture M2 is subjected to a separation step by analogy with step S102 in Fig. 1, to further reduce the particle size in the soy base 12 compared to the mixture M2. Compared to the conventional method in Fig. 1, the amount of residue 11 will be reduced by virtue of the processing in step S203, since the particle size is smaller in mixture M2 than in mixture M1.

In some embodiments, by proper optimization of steps S201 and S203, the method produces a liquid soy base 12 that includes at least 90%, 95% or 98% by weight of the solid content of the soya beans 10a that were provided as input material to the method. Thus, a very small proportion, if any, of the solid content needs to be removed during production of the soy base.

It is currently believed that an acceptable quality of the soy base is achieved when the second particle size, given as D90, is less than 200 µm. A larger second particle size may lead to a "gritty and chalky" mouth feel of the final product that is produced from the soy base 12. It is currently believed that the perceived quality of the final product is improved with smaller second particle size of the soy base. Thus, in some embodiments, the method is designed to achieve a second particle size, given as D90, of less than 180 µm, 160 µm, 140 µm, 120 µm, 110 µm, or 100 µm.

It is likely that the improvement in perceived quality is small when the second particle size is below a given size limit. Thus, although it may be possible to optimize the method in Fig. 2A to achieve a second particle size below this size limit, the effort may not be worthwhile. Depending on requirements on the perceived quality of the final product, the size limit, given as D90, may be 55 µm, 60 µm, 65 µm, 70 µm, 75 µm, 80 µm, 85 µm, 90 µm or 95 µm.

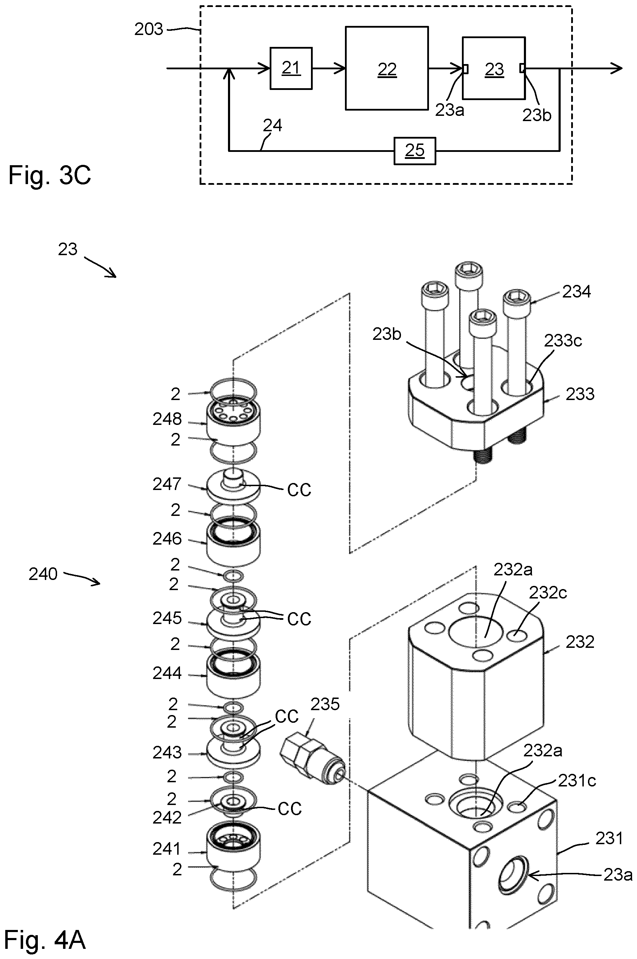

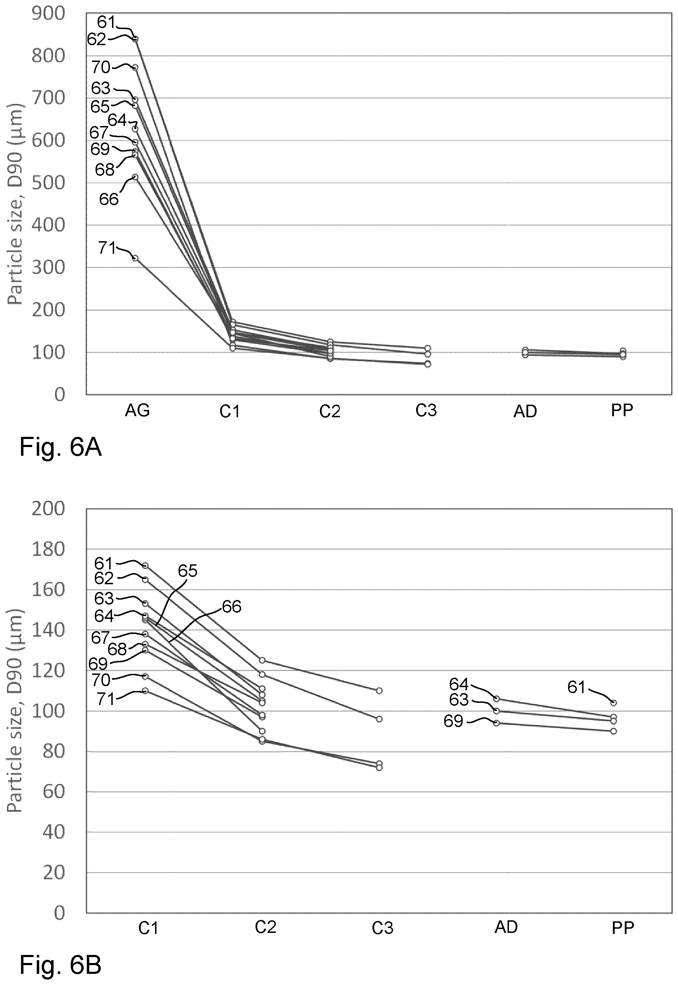

Experiments have been conducted to analyze the impact of the first particle size on the second particle size, as well the impact of repeatedly subjecting the mixture to processing by HDC. Figs 6A-6B are graphs of particle size, given as D90, at different stages during test production of a final product, for different tests 61-71. Fig. 6B is an enlarged view of part of Fig. 6A. The test production included the method in Fig. 2A for producing the soy base 12, as well as subsequent steps for producing a final product based on the soy base 12 and for packaging the final product. Stage AG is after the griding step S201, stage C1 is after a first instance of HDC processing, stage C2 is after a second instance of HDC processing, stage C3 is after a third instance of HDC processing, stage AD is after dilution of the soy base, and stage PP is when the final product, a soy beverage, is packaged. The tests differ by the grinding in step S201, which was performed to give mixtures M1 of different particle sizes, as seen at state AG in Fig. 6A. The particle size at the different stages was determined by use of commercially available particle analyzers, either Mastersizer from Malvern Panalytical, or LA-950 from Horiba. The experiments were performed by use of cavitation device that is described below with reference to Figs 4A-4C. Figs 3A-3B, to be described further below, illustrate structures for achieving a single instance of HDC processing and two sequential instances of HDC processing, respectively.

Some conclusions may be drawn from the results in Figs 6A-6B. One general observation is that while the second instance of HDC processing results in a relatively large reduction in particle size, the third instance of HDC processing leads to a relatively smaller reduction in particle size. This leads to the conclusion that if sequential instances of HDC processing are to be performed, the number of instances may be limited to two. It may be noted that each instance of HDC processing consumes power and the more limited reduction in particle size by the third instance of HDC processing may not justify the additional power consumption. It is also seen in Fig. 6A that a single instance of HDC processing may be sufficient to achieve an acceptable particle size in the soy base, for example if the particle size should be in the range of 100-200 µm. Another observation is that the particle size at stage AG has a small but noticeable impact on the particle size at stage C1 (and stage C2). Thus, the performance of step S201 may be optimized to achieve an improved performance of the method as a whole. On the other hand, given that the impact is small, it is possible to achieve a desired particle size for many implementations of the grinding step S201, for example if the desired particle size of the soy base is in the range of 100- 200 µm for a single instance of HDC processing, or in the range of 80-140 µm for two instances of HDC processing.

Based on the experimental results and other experience, it is currently bellowed that the first particle size, after step S201, should be less than 1000 µm, given as D90. Given the experimental results, it is expected that a smaller first particle size results in a smaller second particle size. Thus, in some embodiments, the first particle size may be less than 900 µm, 800 µm, or 700 µm, given as D90. On the other hand, the experimental results indicate a limited benefit of achieving a first particle size that is too small. Thus, in some embodiments, the first particle size may be at least 300 µm, 400 µm, or 500 µm.

Further experiments indicate that a heat treatment of the mixture M1 before step S203 may be beneficial to reduce the particle size of the mixture M2. It is believed that the heat treatment results in a softening of the solid material in the mixture M1, including fibers, thereby facilitating the disintegration of the solid material in step S203. Such a heat treatment may or may not be part of step S202.

Fig. 2B is a block diagram of an example system for performing the method in Fig. 2A. The system comprises a main griding arrangement (MGA, "first grinding arrangement") 201, an enzyme deactivation arrangement (EDA) 202, and a fine griding arrangement 203 (FGA, "second grinding arrangement"), which are configured to perform steps S201, S202, S203, respectively. The arrangements 201-203 are arranged to sequentially and gradually convert the input material 10a, 10b into the soy base 12. The main grinding arrangement 201 may comprise one or more mills, which are configured for mechanical processing of the soya beans 10a and the water based-liquid 10b. The present Applicant has found that an adequate mixture M1, for example in view of the experimental results in Figs 6A-6B, may be produced in a robust way by employing at least two mills connected in sequence so that the output of one mill is supplied as input to the next mill. In some embodiments, the respective mill is disc mill or a colloid mill. The EDA 202, which is optional, may alternatively be at least partly located within the FGA 201. The FGA 203 is configured to process the incoming mixture (M1 in Fig. 2A) by HDC to produce an output mixture (M2 in Fig. 2A) with a particle size that is smaller than the particle size of the incoming mixture.

Fig. 3A is a block diagram of an FGA 203 in accordance with an embodiment. The FGA 203 comprises a first pump 21, a second pump 22 and a cavitation device 23, which are connected in series. The cavitation device 23 comprises an inlet 23a and an outlet 23b and is configured to subject the incoming mixture at the inlet 23a to HDC and output a resulting mixture at the outlet 23b. In a preferred embodiment, the cavitation device 23 is configured to pass the incoming mixture through a constricted channel into an expansion chamber so that the combination of pressure and kinetic energy generates high energy cavitation bubbles in the expansion chamber. Such a cavitation device may be configured without moving parts, which may be beneficial in terms of operating stability and robustness. However, this type of cavitation device requires a high pressure at its inlet 23a, especially if the cavitation device 23 includes a series of constricted channels and expansion chambers to achieve a small particle size of the resulting mixture at the outlet 23b. It is currently believed that an inlet pressure P2 in the range of 100-1000 barg (gauge pressure) is required, for example at least 100 barg, 200 barg, 300 barg or 400 barg. To achieve such inlet pressures, it may be beneficial to use plural pumps to stepwise increase the pressure of the incoming mixture upstream of the cavitation device 23. This will reduce both the requirements and the load on the respective pump. The present Applicant has found that two pumps 21, 22 are generally sufficient. In the example of Fig. 3A, a first pump 21 is arranged to receive the mixture M1, which may be at atmospheric pressure or a slightly elevated pressure. The first pump 21 may be configured to generate an intermediate pressure P1 in the range 1-10 barg, thereby allowing a second pump 22 to achieve a proper inlet pressure P2.

Fig. 3B is a block diagram of an FGA 203 in accordance with an alternative embodiment. Here, a first combination of two pumps 21, 22 and an upstream cavitation device 23 is followed by a second combination of two pumps 21', 22' and a downstream cavitation device 23'. The downstream cavitation device 23' comprises an inlet 23a' and an outlet 23b' and is configured to subject the incoming mixture at the inlet 23a' to HDC and output a resulting mixture at the outlet 23b'. The second combination may or may not be structurally identical to the first combination. As seen, the incoming mixture to the FGA 203 is processed in sequence by the first and second combinations, where the pump 21' is fluidly connected to the outlet 23b of the upstream cavitation device 23. Thus, the embodiment in Fig. 3B comprises two stages of HDC processing. In a variant, not shown, a single pump may be arranged in the flow path between the cavitation devices 23, 23', to pressurize the output mixture of the upstream cavitation device 23 to a suitable inlet pressure at the downstream cavitation device 23'.

It is beneficial for the inlet pressure at each cavitation device 23, 23' to be in the above-mentioned range of 100-1000 barg, for example at least 100 barg, 200 barg, 300 barg or 400 barg. The pressure drop over the respective cavitation device 23, 23' is significant. Hence, one or more pumps is typically required between the cavitation devices 23, 23' to achieve a proper inlet pressure at the downstream cavitation device 23'.

The experimental data in Figs 6A-6B was obtained in a test rig corresponding to Fig. 3B, but with three with identical stages and using an inlet pressure of 400 barg at the respective cavitation device.

It may be noted that, in theory, it may be possible to attain the same particle size with a single cavitation device compared to two or more cavitation devices connected in series, provided that the single cavitation device is operated with a significantly higher inlet pressure. The skilled person understands that the required power consumption increases rapidly with increasing inlet pressure. Thus, the use of two or more cavitation devices will enable significant power savings for a given particle size of the resulting soy base. Further, the requirements on the pump(s) and the cavitation device is likely to increase with increasing inlet pressure, further increasing cost and potentially reducing the operational reliability of the FGA 203.

Fig. 3C is a block diagram of an FGA 203 in accordance with another embodiment. Like in Fig. 3A, two pumps 21, 22 are connected in series upstream of a cavitation device 23. A recirculation path 24 is arranged to extend from a location downstream of the cavitation device 23 to a location upstream of the pumps 21, 22. A flow regulator 25 is arranged in the recirculation path 24. The FGA 203 in Fig. 3C allows for recirculation of a fraction of the output mixture from the cavitation device 23. The fraction is defined by the flow regulator 25, which may comprise a pump, valve, restrictor, etc. The flow regulator 25 may be fixed or variable. By the recirculation, the FGA 203 will subject the incoming mixture to plural instances of HDC processing. However, compared to the embodiment in Fig. 3B, the throughput is reduced. For example, if the recirculated fraction is 0.8, the throughput is only 20% of the throughput in Figs 3A-3B. It is conceivable to combine the embodiments in Figs 3B-3C, by providing for recirculation over one or more of the cavitation devices in Fig. 3B.

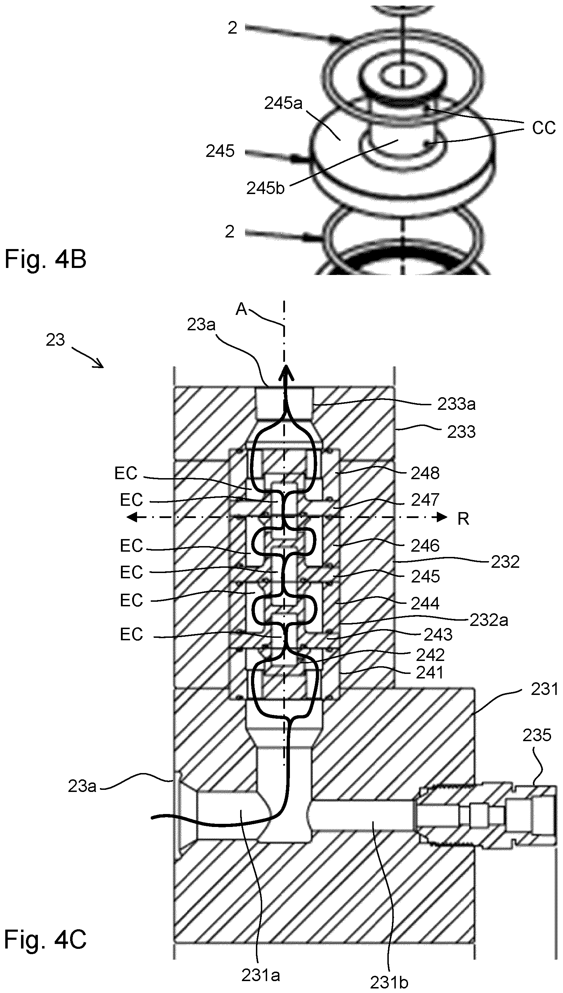

Figs 4A-4C illustrate an example cavitation device 23 according to an embodiment. The cavitation device 23 is configured to perform HDC processing without moving parts and comprises constriction channels CC ("constricted flow channels") leading to expansion chambers EC. Turning first to Fig. 4C, which shows a cross-section of the cavitation device 23, the fluid flow through the cavitation device 23 is indicated by a solid arrow. As seen, the fluid flow follows a meandering flow path through the cavitation device 23. The provision of a meandering flow path enables the cavitation device 23 to accommodate a large number of constriction channels CC per unit volume, thereby increasing the performance of the cavitation device 23. As seen in Fig. 4C, the cavitation device 23 comprises a plurality of expansion chambers EC that are fluidly connected in series by constriction channels CC. In the illustrated example, two constriction channels CC extend to each expansion chamber EC, although any number may be used. As used herein, a constriction channel CC is dimensioned to cause a fluid that flows from the constriction channel CC into the expansion chamber EC to undergo hydrodynamic cavitation. The skilled person realizes that the dimensioning of the constriction channel CC depends on the properties of the fluid and the inlet pressure of the cavitation device 23. Proper dimensions may be determined by routine experimentation.

In the illustrated example, the meandering flow path is achieved by use of expansion chambers EC that are either cylindrical or ring-shaped. As seen in Fig. 4C, cylindrical expansion chambers and ring-shaped expansion chambers are arranged alternately in an axial direction A of the cavitation device 23. All expansion chambers EC are centered on the axial direction A and arranged so that the ring-shaped expansion chambers are located radially outside of the cylindrical chambers. Constriction channels CC extend between adjacent pairs of cylindrical and ring-shaped expansion chambers. In the illustrated example, the constriction channels CC extend in a radial direction R, which is transverse to the axial direction A. This provides a compact cavitation device 23 and may facilitate manufacture of the channels CC.

As seen in Fig. 4A, the cavitation device 23 comprises a cavitation block 232 that defines a cylindrical mounting channel 232a, which is configured to receive a cavitation assembly 240. The cavitation assembly 240 comprises a stack of components that are configured to define the expansion chambers EC and the constriction channels CC. In the illustrated example, the cavitation assembly 240 comprises an inlet insert 241 and an outlet insert 248 at its respective end. A nipple insert 242 that defines a projection with an axial blind hole is inserted in the inlet insert 241, and a nipple plate insert 243 with a bottom plate and a projection with an inverted blind hole is mounted on the open nipple insert 242, to define a first cylindrical expansion chamber. A ring insert 244 is mounted on the nipple plate insert 243, and a further nipple plate insert 245 is mounted on the ring insert 244, to define a first ring-shaped expansion chamber and a second cylindrical expansion chamber. For further clarity, Fig. 4B provides an enlarged view of the nipple plate insert 245. As seen, the nipple plate insert 245 comprises a bottom plate 245a and a projection 245b. The projection 245b defines an inverted blind hole that extends from an opening in the bottom plate 245a (see, for example, insert 245 in Fig. 4C). The circumference of the bottom plate 245b is dimensioned to match the circumference of the ring inserts, so that the bottom plate 245 will be engaged between two ring inserts to separate ring-shaped expansion chambers which are axially adjacent. The insert 245 is identical to the inserts 243, 247. Returning to Fig. 4A, a further ring insert 246 is mounted on the nipple plate insert 245, and a nipple plate insert 247 is mounted on the ring insert 246, to thereby define a second ring-shaped expansion chamber and a third cylindrical expansion chamber. A further ring insert 248 is mounted on the nipple plate insert 247 to define a third ring-shaped expansion chamber. As seen in Fig. 4A, constriction channels CC are defined in the projections of inserts 242, 243, 245 and 247, and gaskets 2 are arranged between the inserts 241-248 to prevent leakage between the expansion chambers.

The cavitation block 232 is mounted between a base block 231 and a top block 233 with the mounting channel 232a in alignment with an outlet channel 233a in the top block 233 and an inlet channel 231a in the base block 231. The outlet channel 233a extends to the outlet 23b, and the inlet channel 231a extends from the inlet 23a. In the illustrated example, the blocks 231-233 are joined by bolts 234 that extend in aligned through-holes 233c, 232c in the blocks 233, 232 and engage with threads in blind holes 231c in the block 231. As seen in Fig. 4C, an additional channel 231b defined in the base block 231 in fluid communication with the inlet channel 231a. A safety valve 235 is engaged in the additional channel 231b and configured to release (open) when the inlet pressure exceeds a predefined limit.

The structure in Figs 4A-4C is merely given as an illustrative example of the cavitation device 23. For example, the cavitation assembly 240 may include any number of intermediate inserts between the inlet and outlet inserts. The cavitation device 23 may include any number of expansion chambers, and the expansion chambers need not be arranged in sequence along the flow path. Further, the flow path need not be meandering.

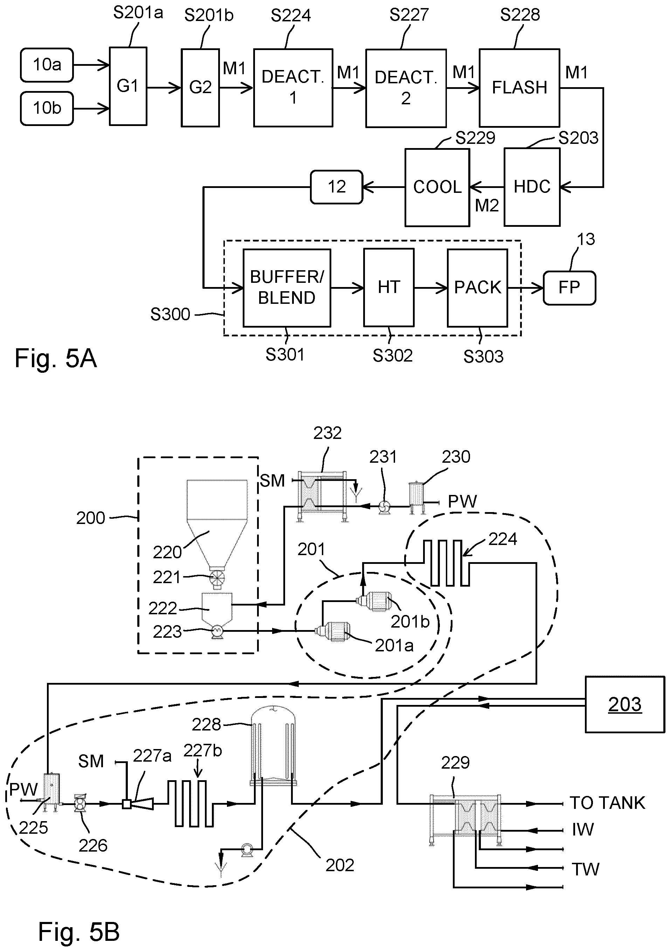

Fig. 5A is a detailed implementation example of a method for producing final product, FP 13, based on soya beans 10a and water 10b. In the illustrated example, FP 13 is a soy beverage. The method in Fig. 5A will be described with reference to an example system in Fig. 5B. The system includes a supply arrangement 200 with a silo tank 220 for holding soya beans (whole or dehulled), a dispenser 221 at the bottom of the tank 220, a hopper 222, and a positive displacement pump 223 at the bottom of the hopper 222. The system further comprises a storage tank 230 for receiving process water, PW, from a water source, a positive displacement pump 231, and a heat exchanger 232. The heat exchanger 232 is configured to transfer heat from steam, SM, to the process water, when pumped by the pump 231 through the heat exchanger 232 into the hopper 222. The MGA 201 includes two mills 201a, 201b that are connected in series. The upstream mill 201a may be a perforated disc mill, and the downstream mill 201b may be a colloid mill. The EDA 202 comprises, in sequence along a flow direction, a holding tube 224, a balance tank 225, a positive displacement pump 226, a direct steam injector 227a, a holding cell 227b, and a flash vessel 228. The EDA 202 is followed by the FGA 203, which may be configured to provide the soy base 12 in accordance with any embodiment described herein. Downstream of the FGA 203, the system comprises a plate heat exchanger 229 which is configured for cooling of the soy base 12 to a desired temperature.

In the method in Fig. 5A, soya beans 10a are dosed, by the dispenser 221, from the silo tank 220 into the hopper 222. Heated process water, PW, is supplied to hopper 222 by the pump 231. Thereby, beans 10a and heated PW 10b are provided into the hopper 22 at a pre-set ratio. The level in the hopper 222 may be controlled to avoid air incorporation in the MGA 201. The pump 223 is operated to supply a combination of beans 10a and PW 10b to the MGA 201, which is operated to perform a first grinding sub-step S201a (G1) by the upstream mill 201a and a second grinding sub-step S201b (G2) by the downstream mill 201b. The mills 201a, 201b in the MGA 201 are operated to produce a slurry (mixture M1) with a target particle size. The back pressure to the mills 201a, 201b may be controlled to balance the flow between the mills 201a, 201b as well as to increase the residence time of the slurry in the mills 201a, 201b. The slurry M1 is then transferred to the EDA 202, which is operated to perform, in sequence, a first deactivation step S224 (DEACT. 1), a second deactivation step S227 (DEACT. 2), and a flash cooling step S228 (FLASH). In the first deactivation step S224, the slurry M1 is transferred to the holding tube 224 for deactivation of lipoxygenase enzyme to achieve a low beany taste profile. In the second deactivation step S227, the slurry M1 is processed to deactivate trypsin inhibitors. In order to have a constant flow, the slurry M1 from the holding tube 224 is collected in the balance tank 225 and fed by the pump 226 to the direct steam injector 227a. Tests indicate that a supply pressure for steam of at least 6 barg results in sufficient heating to deactivate trypsin inhibitors. The heated slurry M1 is then directed through the holding cell 227b (spiral or tube), which is configured to hold the slurry M1 at a predefined deactivation temperature for a predefined duration. Although not shown in Fig. 5B, a backpressure regulating valve may be installed downstream of the holding cell 227b to prevent the slurry M1 from boiling. After the second deactivation step S227, the flash cooling step S228 is performed to remove the water introduced by the steam injector 227a. In step S228, the slurry M1 enters the flash vessel 228, which is held at a reduced pressure to cause flash evaporation of the slurry M1. The water that evaporates from the slurry M1 is condensed by use of cooling channels in the flash vessel 228, and the condensed water is diverted to a drain. After step S228, the slurry M1 is subjected to HDC in step S203, by the slurry M1 being transferred to the FGA 203. In step S203, as described hereinabove, the slurry M1 is processed to produce a second mixture M2 (liquid soy base) with a significantly reduced particle size. In step S229, the mixture M2 is cooled in the plate heat exchanger 229. In the illustrated example, the plate heat exchanger 229 is operable to cool the mixture M2 in two stages. The first stage is supplied with tower water, TW, at 30-35°C, and the second stage is supplied with ice water, IW. The target temperature of the soy base 12 after cooling may be 10°C or less. For example, if the soy base 12 is to be stored, the target temperature may be 4°C or less to prevent microbial and pathogen growth.

After step S229, the soy base 12 is available for use as a starting material for downstream formulation into a soy beverage that exhibits stability, high nutritional quality, and pleasant mouthfeel. The implementation shown in Figs 5A-5B involves no separation of solid material and thus utilizes 100% of the soya beans 10a. Consequently, no soy residue by-product is created.

In the example of Fig. 5A, the method further comprises final processing S300 of the soy base 12 into the final product FP. As shown, the final processing S300 may comprise a step S301 of buffering and/or blending the soy base 12. The blending may involve adding one or more ingredients to the soy base 12, and optionally mixing the ingredient(s) with the soy base 12, to form a soy beverage. Such ingredients may comprise any of vegetable oil, flavoring, sweetener, salt, thickener, stabilizer, vitamin, or mineral. The final processing S300 may further comprise heat treatment of the soy base or soy beverage, for example by UHT treatment, ultra-pasteurization, or pasteurization. The final processing S300 may further comprise a packaging step S303 in which the soy base or soy beverage is enclosed in a suitable package for distribution, including but not limited to bottles of glass or plastic, metal cans, or carton-based packages.

It should be noted that the final processing S300 of the soy base 12 into the final product FP does not involve any separation and removal of solid content from the soy base 12. Thus, the final product FP has the same, or larger, content of total solids as the soy base 12.

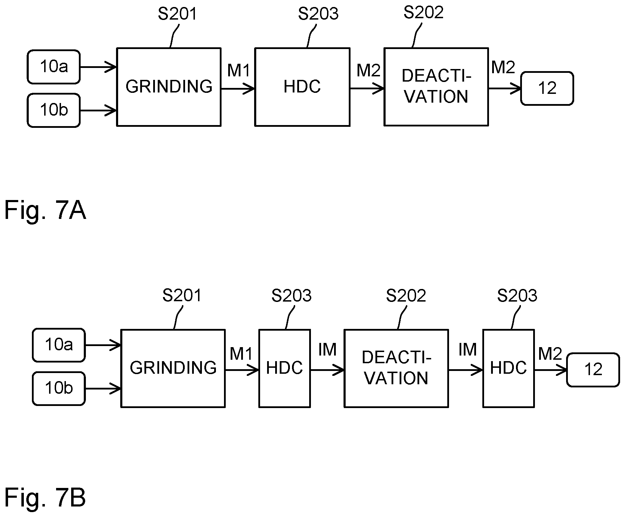

The enzyme deactivation by step S202 may be performed at any time point when the soya beans 10a and the water-based liquid 10b have been mixed into a slurry. As noted with reference to Fig. 2A, the enzyme deactivation need not be performed exclusively between the main grinding step S201 and the fine grinding step S203, but may be partly or fully performed during the main grinding step S201, for example between two grinding sub-steps (cf. S201a, S201b in Fig. 5A). Fig. 7A shows another example, in which step S202 is performed after the fine grinding step S203. Thus, in Fig. 7A, the enzyme deactivation is performed on the second mixture M2 that forms the soy base 12. Fig. 7B shows yet another example, in which step S202 is performed intermediate a first fine grinding sub-step S203a and a second fine griding sub-step S203b. Thus, in the example of Fig. 7B, the fine griding step S203 comprises two sub-steps 203a, 203b, which may be performed by a single FGA 203 or two separate FGAs 203.

Various aspects of the proposed solution have been outlined in the foregoing. Any details and examples as provided may be combined in any way or form that is not clearly contradictory, or in accordance with any combination of the features of the clauses C1 to C47 set out below.

C1. A system for producing a liquid soy base (12) for human consumption, said system comprising: a first grinding arrangement (201), which is arranged to mechanically process soya beans (10a) and a water-based liquid (10b) into a first mixture with a first particle size; and a second grinding arrangement (203), which is configured to process the first mixture by hydrodynamic cavitation to produce a second mixture with a second particle size that is smaller than the first particle size, wherein the system is configured to provide the liquid soy base (12) based on the second mixture from the second grinding arrangement (203).

C2. The system of C1, which is configured to produce the liquid soy base (12) to include at least 90%, 95% or 98% by weight of a solid content of the soya beans (10a).

C3. The system of C1 or C2, which is configured to produce the liquid soy base (12) without separation and removal of solid content from the first mixture or the second mixture.

C4. The system of any preceding clause, wherein the first particle size, given as D90, is at least 300 µm, 400 µm, or 500 µm.

C5. The system of any preceding clause, wherein the first particle size, given as D90, is less than 1000 µm, 900 µm, 800 µm, or 700 µm.

C6. The system of any preceding clause, wherein the second particle size, given as D90, is less than 200 µm, 180 µm, 160 µm, 140 µm, 120 µm, 110 µm, or 100 µm.

C7. The system of any preceding clause, wherein the second particle size, given as D90, is at least 55 µm, 60 µm, 65 µm, 70 µm, 75 µm, 80 µm, 85 µm, 90 µm or 95 µm.

C8. The system of any preceding clause, wherein the second grinding arrangement (203) comprises a cavitation device (23), which is configured to subject an incoming mixture to hydrodynamic cavitation.

C9. The system of C8, wherein the second grinding arrangement (203) is configured to pressurize the first mixture to an inlet pressure of at least 100 barg, 200 barg, 300 barg or 400 barg at an inlet (23a) of the cavitation device (23).

C10. The system of C8 or C9, wherein the cavitation device (23) is configured to operate without moving parts.

C11. The system of any one of C8-C10, wherein the second grinding arrangement (203) comprises a first pump (21), which is configured to pressurize the first mixture to an intermediate pressure (P1), which is below the inlet pressure (P2), and a second pump (22), which is arranged to receive the first mixture from the first pump (21) and is configured to pressurize the first mixture to the inlet pressure (P1).

C12. The system of C11, wherein the intermediate pressure (P1) is in a range of 1-10 barg.

C13. The system of any one of C8-C12, wherein the second grinding arrangement (203) comprises a further cavitation device (23') which is fluidly connected to an outlet (23b) of the cavitation device (23) to receive an output mixture corresponding to the first mixture from the cavitation device (23), wherein the further cavitation device (23') is configured to subject the output mixture to hydrodynamic cavitation.

C14. The system of C13, wherein the further cavitation device (23) is configured to output the second mixture.

C15. The system of C13 or C14, wherein the second grinding arrangement (203) is configured to pressurize the output mixture to a further inlet pressure of at least 100 barg, 200 barg, 300 barg or 400 barg at an inlet (23a') of the further cavitation device (23').

C16. The system of C15, wherein the second grinding arrangement (203) comprises a further first pump (21'), which is configured to pressurize the output mixture to a further intermediate pressure below the further inlet pressure, and a further second pump (22'), which is arranged to receive the output mixture from the further first pump (21') and is configured to pressurize the output mixture to the further inlet pressure.

C17. The system of any one of C8-C16, wherein the cavitation device (23) comprises an expansion chamber (EC) and one or more constricted flow channels (CC) that extend to the expansion chamber (EC), wherein the expansion chamber (EC) is configured to receive the first mixture from the one or more constricted flow channels (CC) and subject the first mixture to the hydrodynamic cavitation.

C18. The system of C17, wherein the cavitation device (23) comprises a plurality of expansion chambers (EC) that are fluidly connected in series by intermediate constricted flow channels (CC).

C19. The system of C18, wherein the plurality of expansion chambers (EC) and the intermediate constricted flow channels (CC) are arranged to define a meandering flow path within the cavitation device (23).

C20. The system of C18 or C19, wherein the plurality of expansion chambers (EC) comprises cylindrical chambers and ring-shaped chambers, which are arranged in an alternating sequence along and centered on an axial direction (A) of the cavitation device (23), the ring-shaped chambers being located radially outside of the cylindrical chambers, and the alternating sequence of cylindrical chambers and ring-shaped chambers being fluidly connected in series by said intermediate constricted flow channels (CC).

C21. The system of C20, wherein the intermediate constricted flow channels (CC) extend in a radial direction (R) relative to the axial direction (A).

C22. The system of any preceding clause, wherein the first grinding arrangement (201) comprises at least two mills (201a, 201b), which are connected to sequentially process the soya beans (10a) and the water-based liquid (10b) by mechanical disintegration of the soya beans (10a).

C23. The system of C22, wherein the at least two mills (201a, 201b) are selected among disc mills and/or colloid mills.

C24. The system of any preceding clause, further comprising an enzyme deactivation arrangement (202), which is configured to cause at least trypsin inhibitors to be inactivated in the liquid soy base (12).

C25. The system of C24, wherein the enzyme deactivation arrangement (202) is further configured to cause lipoxygenases to be inactivated in the liquid soy base (12).

C26. A method of producing a liquid soy base for human consumption, said method comprising: operating (S201) a first grinding arrangement to mechanically process soya beans and a water-based liquid into a first mixture with a first particle size; operating (S203) a second grinding arrangement to process the first mixture by hydrodynamic cavitation to produce a second mixture with a second particle size that is smaller than the first particle size; and providing the liquid soy base based on the second mixture from the second grinding arrangement.

C27. The method of C26, wherein first and second grinding arrangements are operated to produce the liquid soy base to include at least 90%, 95% or 98% by weight of a solid content of the soya beans.

C28. The method of C26 or C27, which is performed to produce the liquid soy base without separation and removal of solid content from the first mixture or the second mixture.

C29. The method of any one of C26-C28, wherein the first grinding arrangement is operated to produce the first mixture so that the first particle size, given as D90, is at least 300 µm, 400 µm, or 500 µm.

C30. The method of any one of C26-C29, wherein the first grinding arrangement is operated to produce the first mixture so that the first particle size, given as D90, is less than 1000 µm, 900 µm, 800 µm, or 700 µm.

C31. The method of any one of C26-C30, wherein the second grinding arrangement is operated to produce the second mixture so that the second particle size, given as D90, is less than 200 µm, 180 µm, 160 µm, 140 µm, 120 µm, 110 µm, or 100 µm.

C32. The method of any one of C26-C31, wherein the second grinding arrangement is operated to produce the second mixture so that the second particle size, given as D90, is at least 55 µm, 60 µm, 65 µm, 70 µm, 75 µm, 80 µm, 85 µm, 90 µm or 95 µm.

C33. The method of any one of C26-C32, wherein the second grinding arrangement is operated to pressurize the first mixture to an inlet pressure of at least 100 barg, 200 barg, 300 barg or 400 barg at an inlet of a cavitation device, which is operable to subject the first mixture to hydrodynamic cavitation.

C34. The method of C33, wherein the cavitation device operates without moving parts.

C35. The method of C33 or C34, wherein said operating (S203) the second grinding arrangement comprises operating a first pump to pressurize the first mixture to an intermediate pressure, which is below the inlet pressure, and operating a second pump, which is arranged to receive the first mixture from the first pump, to pressurize the first mixture to the inlet pressure.

C37. The method of C36, wherein the intermediate pressure is in a range of 1-10 barg.

C38. The method of any one of C33-C37, wherein the second grinding arrangement is operated to provide an output mixture from the cavitation device to a further cavitation device, which is operable to subject the output mixture to hydrodynamic cavitation.

C39. The method of C38, wherein the further cavitation device is operated to output the second mixture.

C40. The method of C38 or C39, wherein the second grinding arrangement is operated to pressurize the output mixture to a further inlet pressure of at least 100 barg, 200 barg, 300 barg or 400 barg at an inlet of the further cavitation device.

C41. The method of C40, wherein said operating (S203) the second grinding arrangement comprises operating a further first pump to pressurize the output mixture to a further intermediate pressure, which is below the further inlet pressure, and operating a further second pump, which is arranged to receive the output mixture from the further first pump, to pressurize the output mixture to the further inlet pressure.

C42. The method of any one of C33-C41, wherein the cavitation device comprises an expansion chamber and one or more constricted flow channels that extend to the expansion chamber, wherein the expansion chamber receives the first mixture from the one or more constricted flow channels and subjects the first mixture to the hydrodynamic cavitation.

C43. The method of C42, wherein the cavitation device directs the first mixture into a meandering flow path through a plurality of expansion chambers that are fluidly connected in series by intermediate constricted flow channels.

C44. The method of any one of C26-C43, wherein said operating (S201) the first grinding arrangement comprises operating at least two mills to sequentially process the soya beans and the water-based liquid by mechanical disintegration of the soya beans.

C45. The method of C44, wherein the at least two mills are selected among disc mills and/or colloid mills.

C46. The method of any one of C26-C45, further comprising performing an enzyme deactivation to cause at least trypsin inhibitors to be inactivated in the liquid soy base.

C47. The method of C46, further comprising performing the enzyme deactivation to cause lipoxygenases to be inactivated in the liquid soy base.

## Claims

1. A method of producing a liquid soy base for human consumption, said method comprising:
operating (S201) a first grinding arrangement to mechanically process soya beans and a water-based liquid into a first mixture with a first particle size,
operating (S203) a second grinding arrangement to process the first mixture by hydrodynamic cavitation to produce a second mixture with a second particle size that is smaller than the first particle size, and
providing the liquid soy base based on the second mixture from the second grinding arrangement.

2. The method of claim 1, wherein first and second grinding arrangements are operated to produce the liquid soy base to include at least 90%, 95% or 98% by weight of a solid content of the soya beans.

3. The method of any preceding claim, wherein the first grinding arrangement is operated to produce the first mixture so that the first particle size, given as D90, is at least 300 µm, 400 µm, or 500 µm.

4. The method of any preceding claim, wherein the first grinding arrangement is operated to produce the first mixture so that the first particle size, given as D90, is less than 1000 µm, 900 µm, 800 µm, or 700 µm.

5. The method of any preceding claim, wherein the second grinding arrangement is operated to produce the second mixture so that the second particle size, given as D90, is less than 200 µm, 180 µm, 160 µm, 140 µm, 120 µm, 110 µm, or 100 µm.

6. The method of any preceding claim, wherein the second grinding arrangement is operated to produce the second mixture so that the second particle size, given as D90, is at least 55 µm, 60 µm, 65 µm, 70 µm, 75 µm, 80 µm, 85 µm, 90 µm or 95 µm.

7. The method of any preceding claim, wherein the second grinding arrangement is operated to pressurize the first mixture to an inlet pressure of at least 100 barg, 200 barg, 300 barg or 400 barg at an inlet of a cavitation device, which is operable to subject the first mixture to hydrodynamic cavitation.

8. The method of claim 7, wherein the cavitation device operates without moving parts.

9. The method of claim 7 or 8, wherein said operating (S203) the second grinding arrangement comprises operating a first pump to pressurize the first mixture to an intermediate pressure, which is below the inlet pressure, and operating a second pump, which is arranged to receive the first mixture from the first pump, to pressurize the first mixture to the inlet pressure.

10. The method of any one of claims 7-9, wherein the second grinding arrangement is operated to provide an output mixture from the cavitation device to a further cavitation device, which is operable to subject the output mixture to hydrodynamic cavitation.

11. The method of claim 10, wherein the further cavitation device is operated to output the second mixture.

12. The method of claim 10 or 11, wherein the second grinding arrangement is operated to pressurize the output mixture to a further inlet pressure of at least 100 barg, 200 barg, 300 barg or 400 barg at an inlet of the further cavitation device.

13. The method of any one of claims 7-12, wherein the cavitation device comprises an expansion chamber and one or more constricted flow channels that extend to the expansion chamber, wherein the expansion chamber receives the first mixture from the one or more constricted flow channels and subjects the first mixture to the hydrodynamic cavitation.

14. The method of any preceding claim, wherein said operating (S201) the first grinding arrangement comprises operating at least two mills to sequentially process the soya beans and the water-based liquid by mechanical disintegration of the soya beans.

15. A system for producing a liquid soy base (12) for human consumption, said system comprising:
a first grinding arrangement (201), which is arranged to mechanically process soya beans (10a) and a water-based liquid (10b) into a first mixture with a first particle size, and
a second grinding arrangement (203), which is configured to process the first mixture by hydrodynamic cavitation to produce a second mixture with a second particle size that is smaller than the first particle size,
wherein the system is configured to provide the liquid soy base (12) based on the second mixture from the second grinding arrangement (203).
